# FASCICULE DE BREVET EUROPEEN

(11) **EP 0 389 322 B1**
(45) Date de publication et mention de la délivrance du brevet: **13.12.1995**
(21) Numéro de dépôt: 90400582.4
(22) Date de dépôt: 02.03.1990
(51) Int. Cl.: A01F 15/08, B30B 9/30

(54) **Dispositif de régulation de densité pour ramasseuse-presse à balles parallélépipédiques**
Vorrichtung zur Regelung des Pressdrucks in einer Grossballenpresse
Regulation apparatus for the density control in a large-bale press

(30) Priorité: 03.03.1989 FR 8902832
(43) Date de publication de la demande: 26.09.1990
(60) Demande divisionnaire: 95200421.6
(73) Titulaire: NEW HOLLAND BELGIUM N.V., B-8210 Zedelgem (BE)
(72) Inventeur: Mathis, Michel H., F-85300 Challans (FR)
(74) Mandataire: Feldkamp, Rainer, Dipl.-Ing.

(56) Documents cités:
- EP-A- 346 586
- EP-A- 0 235 397
- AU-B- 431 439
- US-A- 4 148 254
- US-A- 4 565 123

## Description

La présente invention concerne une ramasseuse-presse de fourrage à balles parallélépipédiques équipée d'un dispositif de régulation de densité des balles.

Dans une presse à balles parallélépipèdiques, comme par exemple illustrée dans le document US-A-4 132 164, la compression du fourrage est assurée à l'aide d'un piston principal entraîné en va-et-vient dans un canal de compression.

Des tranches de fourrage alimentées à partir d'un conduit latéral lors du recul du piston sont ensuite comprimées par le piston entre sa face avant et la partie de balle de fourrage déjà présente dans le canal de compression qui sert ainsi "d'enclume".

L'effort de compression imprimé à la tranche de fourrage est directement lié à l'effort nécessaire au coulissement de la balle à l'intérieur du canal de compression.

Cet effort de coulissement est égal aux forces longitudinales de retenue résultant du frottement de la balle sur les parois du canal de compression.

Cependant, selon les conditions de fonctionnement, les forces de frottement et donc de retenue de la balle peuvent être extrêmement variables, de sorte que les tranches successives sont comprimées de façon inégale, ce qui se traduit par des défauts d'homogénéité dans la balle.

On connaît du document US-A-4 168 659, un dispositif permettant de réguler l'effort de compression, et donc de produire une balle plus homogène.

Les parois du canal de compression sont réalisées partiellement sous la forme de volets pivotants appliqués sous un effort transversal variable sur les faces extérieures de la balle de fourrage afin de produire une force longitudinale de retenue variable et donc influer sur l'effort de compression.

L' effort sur le piston équilibre l'effort de glissement de la balle dans le canal qui est dépendant de l'effort transversal appliqué par les volets et du coefficient de frottement qui transforme l'effort transversal en effort longitudinal.

De plus, il existe un effort dynamique généré par l'accélération de la masse de fourrage comprise dans le canal.

Le but principal pour une presse à fourrage étant de réaliser une compression optimale du produit pour réaliser la compression du fourrage dans les conditions déterminées par l'utilisateur en début de chantier, il faut rechercher la régularité de la densité, donc la régularité de l'effort sur le piston.

Dans les conditions d'utilisation de la machine, il existe de nombreux facteurs qui influent sur le coefficient de frottement (humidité, type de produit...), et dans un même chantier, les efforts générés par le piston peuvent être très variables.

Dans le document US-A-4 168 659, les volets pivotants sont mûs par des vérins hydrauliques et l'embiellage du piston principal comporte un montage à excentrique coopérant avec un groupe à piston et cylindre destiné d'une part à fournir du fluide sous pression aux vérins et d'autre part à délivrer une pression de commande pour une valve de régulation, cette pression de commande étant fonction de l'effort de compression appliqué par le piston principal.

Un tel arrangement présente divers inconvénients :
- en premier lieu, si l'effort de compression est trop faible, le système n'est pas capable de réagir immédiatement et la montée en pression dans le vérin de volet nécessitera un ou plusieurs autres aller-retour du piston, pendant lesquels les tranches successives seront insuffisamment comprimées.
- en second lieu, en cas de mauvais réglage de la valve de régulation, la chambre de vérin peut être parfois excessivement déchargée.
- enfin, du fait de la double fonction du groupe piston-cylindre associé au montage à excentrique de la bielle de piston principal, servant à la fois en tant que source de fluide sous pression et de détecteur de pression, le système présente une hystérésis importante conduisant à des temps de réponse relativement longs. Ainsi, l'effort de compression réellement appliqué par le piston principal peut franchement dépasser le seuil désiré avant que le tiroir de la valve de régulation ne se déplace pour décharger le vérin.

EP-A-0 235 397 concerne une ramasseuse-presse conforme au préambule de la revendication 1. Le dispositif de détection de l'effort de compression appliqué par le piston sur les tranches de fourrage présentes dans le canal de compression comporte des vérins hydrauliques interposés entre le bâti de la machine et un volet susceptible de coulisser longitudinalement sous l'action des forces de friction exercées par le fourrage sur ledit volet.

Ce document représente l'état de la technique le plus proche de l'objet de la présente invention qui s'en distingue par les caractéristiques de la partie caractérisante de la revendication 1.

Les détails et avantages de l'invention apparaîtront clairement à la lecture de la description qui va suivre, en se référant aux dessins annexés, dans lesquels :
- la figure 1 est une vue en coupe longitudinale schématique d'une ramasseuse-presse et d'un circuit hydraulique de régulation de densité associé,
- la figure 2 illustre un mode de réalisation à commande électronique de la valve de régulation,
- la figure 3 est un bloc-diagramme d'un circuit électronique du mode de réalisation de la figure 2.

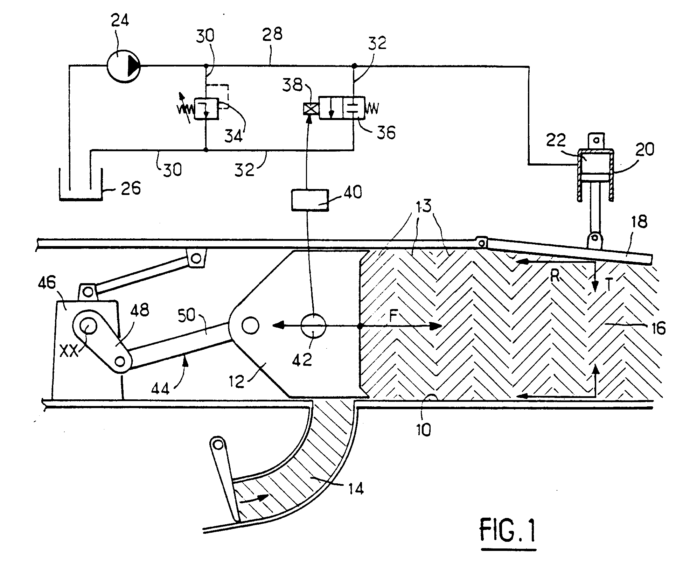

Dans le schéma d'ensemble de la figure 1, on a représenté un canal de compression 10 d'une ramasseuse-presse dont les autres éléments ont été omis afin de simplifier la figure, et pour une description plus complète, on se reportera avantageusement au brevet US-A-4 132 164.

Un piston principal 12 coulisse en va-et-vient dans le canal de compression afin d'y comprimer des tranches 13 successives de fourrage, introduites depuis un conduit latéral 14, et constituer progressivement dans le canal 10 une balle 16 parallélépipèdique.

A chaque avancée, le piston 12 exerce sur la balle un effort de compression F plus ou moins important selon la résistance que la balle rencontre par frottement le long des parois du canal 10.

Afin de faire varier cette résistance et donc réguler l'effort de compression, les parois du canal comprennent au moins un volet 18 articulé entraîné par un vérin 20 de façon à appliquer sur au moins une zone externe de la balle une force transversale T qui, en raison du coefficient de frottement, se traduit par une force longitudinale R de résistance à l'avancement de la balle 16.

La chambre 22 du vérin 20 est raccordée à un circuit hydraulique constitué de la manière suivante:
une pompe 24 puise du liquide dans un réservoir 26 basse pression pour le refouler dans une conduite haute pression 28 raccordée à la chambre de vérin 22,
entre le refoulement de la pompe 24 et le vérin, sont prévues deux conduites de dérivation 30, 32,
la première 30 traverse un limiteur de pression de tout type classique 34 de préférence réglable, destiné à maintenir dans la conduite haute pression 28 une pression de liquide au plus égale à une valeur prédéterminée ; ce conduit 30 aboutit ensuite au réservoir 26,
La seconde traverse un régulateur de pression 36 du type à 2 voies/ 2 positions rappelé élastiquement vers une position de fermeture dans laquelle le régulateur est fermé et actionné par une tête de manoeuvre 38 vers une position d'ouverture ; ce conduit 32 aboutit ensuite également au réservoir 26.

Conformément à l'invention, la tête de manoeuvre 38 est commandée par une unité de commande 40 elle-même opérativement associée à un détecteur d'effort de compression 42 agencé indirectement sur l'ensemble de transmission 44 du piston, cet ensemble comprenant dans l'exemple illustré un groupe moto-réducteur 46 d'axe XX transversal entraînant une manivelle 48 et une bielle 50 montée entre l'extrémité de la manivelle et un point central du piston.

Le régulateur 36 est fixé en un endroit stationnaire vis-à-vis de la machine.

La tête de manoeuvre 38 du régulateur 36 comprend un électro-aimant 39, alimenté depuis une source électrique 62, par exemple la batterie d'un véhicule tracteur, par un circuit électrique comprenant un circuit de commutation 78.

Le détecteur d'effort 42 est constitué par un groupe de jauges de contraintes assujetties à un bras 68 de réaction interposé entre le bâti 70 de machine et le groupe moto réducteur 46 d'entraînement de la manivelle 48 de transmission.

Comme on le comprendra, les forces de compression F appliquées par le piston au fourrage se traduisent par des forces de réaction -F opposées sur le groupe moto-réducteur 46. Le bras 68, ou tirant, de réaction s'étend généralement dans l'axe du canal de compression 10 afin d'encaisser ces forces de réaction, directement fonction de l'effort de compression.

Les jauges de contraintes sont raccordées à une unité de commande électronique 72 qui traite le signal reçu des jauges et le compare à un seuil de référence représentatif d'un effort de compression maximal désiré.

L'unité de commande 72 est reliée à l'électro-aimant 39 ; elle déclenche l'alimentation (ou la coupure) de ce dernier lorsque le seuil est dépassé, et coupe (ou établit) l'alimentation lorsque le signal reste au dessous du seuil.

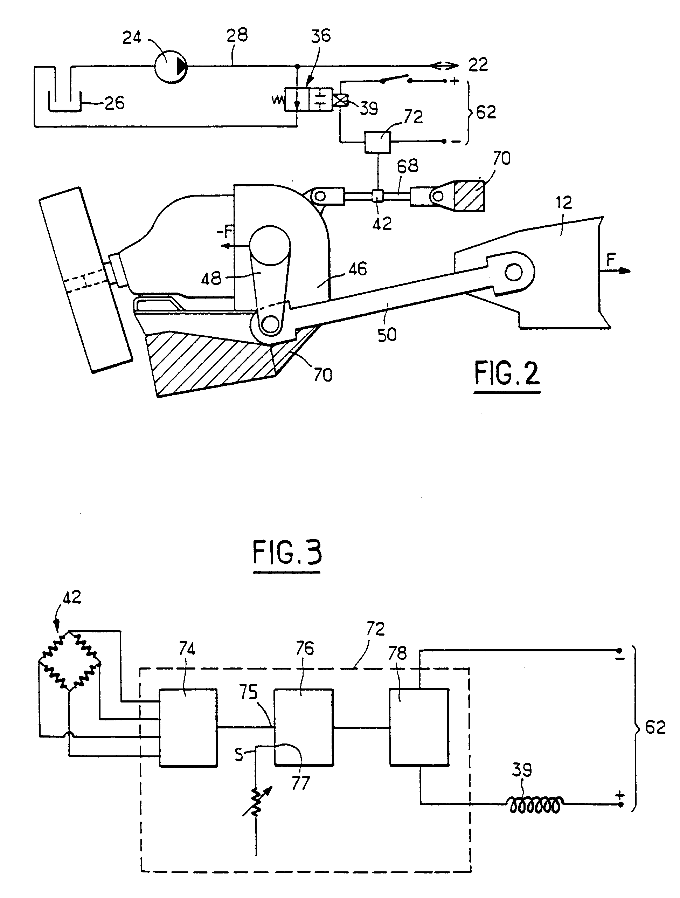

A la figure 3, on a représenté un bloc-diagramme d'une telle unité de commande 72.

Les jauges de contraintes, agencées en "pont", sont raccordées à un circuit de conditionnement et d'amplification 74 de signal, produisant un signal de sortie dont la tension est fonction de l'effort de traction subi par le tirant 68.

Le signal de sortie du circuit de conditionnement et d'amplification 74 est appliqué à l'une des entrées 75 d'un circuit comparateur 76, dont l'autre entrée 77 reçoit un signal de seuil S de tension réglable.

Ainsi, le circuit comparateur 76 délivre en sortie un signal soit de tension prédéterminée lorsque le signal appliqué au comparateur dépasse le signal de seuil, soit de tension nulle lorsque le signal appliqué au comparateur est inférieur au signal de seuil.

Ce signal de sortie du comparateur 76 est appliqué au circuit de commutation 78 entre le source de courant 62 et l'électro-aimant, afin de provoquer l'alimentation ou la coupure de ce dernier selon le signal appliqué à l'entrée du circuit de commutation 78.

De la sorte, lorsque le circuit comparateur 76 délivre un signal de tension prédéterminée, il commande, par déplacement de la tête de manoeuvre 38, la mise en condition ouverte du régulateur 36.

La conduite haute pression 28, et donc la chambre 22 de vérin, sont mises en communication avec le réservoir 26, ce qui réduit la pression dans la chambre de vérin et, par voie de conséquence, la force transversale T exercée par le volet 18 et la force résistante R longitudinale exercée par ce dernier sur la balle 16. La force de compression F est ainsi réduite, jusqu'à ce que le circuit comparateur 76 délivre un signal de tension nulle et que le régulateur 36 revienne à sa condition de fermeture.

On remarque donc que le vérin 20 est constamment alimenté, sous une pression fixée par le limiteur 34, et exerce donc sur la balle 16 une force transversale permanente de valeur constante. Ce n'est que lorsque le circuit comparateur 76 délivre un signal de tension déterminée suite à un dépassement d'un seuil d'effort de compression F que la chambre de vérin est déchargée afin de réduire la force transversale jusqu'à ce que l'effort de compression diminue au dessous du seuil.

Le circuit de commutation 78 peut être soit du type "normalement ouvert", soit du type "normalement fermé".

Dans le premier cas, le circuit de commutation 78 est ouvert lorsque le circuit comparateur 76 délivre un signal de tension nulle, l'électro-aimant 39 n'est pas alimenté et le régulateur 36 reste fermé ; la chambre 22 de vérin reste donc alimentée à la pression maximale. Par contre, lorsque le circuit comparateur 76 délivre un signal de tension prédéterminée, le circuit de commutation 78 se ferme et l'électro-aimant 39 est alimenté, ce qui provoque l'ouverture du régulateur et la chute de pression dans le vérin.

Dans le second cas, le circuit de commutation 78 est fermé lorsque le circuit comparateur 76 délivre un signal de tension nulle, l'électro-aimant 39 est alimenté et maintient le régulateur 36 en condition fermée, ce dernier étant bien entendu inversé à cette fin; la chambre de vérin 22 reste alimentée à la pression maximale. Par contre, lorsque le circuit comparateur 76 délivre un signal de tension prédéterminée, le circuit de commutation 78 s'ouvre et l'électro-aimant n'est plus alimenté, ce qui provoque l'ouverture du régulateur et la chute de pression dans le vérin.

Le mode de réalisation de l'invention présente l'avantage que tous les composants du système de contrôle de la densité des balles sont stationnaires par rapport à la machine.

## Revendications

1. Ramasseuse-presse de fourrage à balles parallélépipédiques comportant
un bâti de machine (70),
un canal de compression (10) dans lequel des tranches successives de fourrage (13) sont introduites, ledit canal de compression (10) étant délimité par des parois ayant au moins un volet articulé (18),
un piston principal (12) entrainé en va-et-vient dans ledit canal de compression afin de faire avancer lesdites tranches de fourrage (13), cependant que ledit volet (18) peut être actionné pour appliquer une résistance réglable au mouvement d'avancement desdites tranches de fourrage (13) grâce à quoi ledit piston (12) comprime lesdites tranches de fourrage pour constituer des balles et ledit volet (18) commande la densité desdites balles,
un ensemble de transmission (44) destiné à entraîner ledit piston (12) en va-et-vient,
un dispositif de détection de l'effort de compression appliqué par ledit piston principal (12) sur les tranches de fourrage (13) présentes dans ledit canal de compression pendant les courses de compression dudit piston principal (12), ledit dispositif de détection étant destiné à fournir un signal représentatif dudit effort, et
des moyens hydrauliques (20, 24, 36) destinés à régler automatiquement la position dudit volet (18) en fonction dudit signal afin de commander la densité des balles, lesdits moyens hydrauliques comportant un vérin hydraulique (20) associé audit volet (18), une source de fluide sous pression (24) destinée à produire un débit continu de fluide sous pression et des moyens (28, 36, 38, 40) pour alimenter en fluide ledit vérin (20) lorsque ledit signal est inférieur à un seuil prédéterminé et pour dériver le débit de fluide vers un réservoir basse pression (26) lorsque ledit signal est supérieur audit seuil,
caractérisée en ce que
le dispositif de détection comporte un bras de réaction (68) interposé entre le bâti de machine (70) et l'ensemble de transmission (44) de manière à être soumis, pendant les courses de compression du piston (12) à des forces de réaction proportionnelles aux forces de compression appliquées par le piston (12) sur les tranches de fourrage (13) présentes dans le canal de compression, et
des jauges de contraintes (42) associées audit bras de réaction (68) et destinées à détecter les contraintes induites dans ledit bras de réaction (68) par lesdites forces de réaction, et à fournir un signal représentatif desdites forces de réaction, et
en ce qu'il est prévu une unité de commande électronique (72) destinée à commander les moyens hydrauliques (20, 24, 36) en fonction du signal représentatif fourni par lesdites jauges de contrainte (42).

2. Ramasseuse-presse selon la revendication 1, caractérisée en ce que l'ensemble de transmission (44) comporte un groupe moto-réducteur (46) et en ce que le bras de réaction (68) est interposé entre le bâti de machine (70) et ledit groupe moto-réducteur (46).

3. Ramasseuse-presse selon la revendication 2, caractérisée en ce que le bras de réaction (68) est réalisé sous la forme d'un tirant disposé de manière à s'opposer aux forces de réaction auxquelles le groupe moto-réduction est soumis.

4. Ramasseuse-presse selon l'une des revendications 1 à 3, caractérisée en ce que les moyens hydrauliques (20, 24, 36) comprennent :
un conduit (28) reliant en permanence la source de fluide sous pression (24) audit vérin hydraulique (20),
un conduit dérivé (32) depuis ledit conduit (28) vers le réservoir de fluide (26) à basse pression,
un régulateur (36) dans ledit conduit dérivé (32), ledit régulateur (36) comportant une tête de manoeuvre (38) et lesdites jauges de contrainte (42) étant opérativement associées, par l'intermédiaire de ladite unité de commande électronique (72), à la tête de manoeuvre (38) du régulateur (36) afin de maintenir ce dernier fermé lorsque les jauges de contraintes (42) délivrent ledit signal qui est inférieur audit seuil et d'ouvrir le régulateur (36) lorsque les jauges de contraintes (42) délivrent ledit signal qui est supérieur audit seuil.

5. Ramasseuse-presse selon la revendication 4, caractérisée en ce que :
le régulateur (36) est monté fixe par rapport à' la ramasseuse-presse,
la tête de manoeuvre (38) du régulateur (36) comporte un électro-aimant (39), et
l'unité de commande électronique (72) commande ledit électro-aimant (39) en fonction des signaux délivrés par lesdites jauges de contraintes (42).

## Claims

1. Pick-up baler for fodder with parallelepiped-shaped bales comprising
a machine frame (70),
a compression duct (10) in which the successive wads of fodder (13) are introduced, said compression duct (10) being bounded by walls having at least one articulated flap (18),
a main plunger (12) driven to and fro in said compression duct in order to cause said wads of fodder (13) to advance, while said flap (18) can be actuated to apply an adjustable resistance to the advance movement of said wads of fodder (13) as a result of which said plunger (12) compresses said wads of fodder to make bales and said flap (18) controls the density of said bales,
a transmission assembly (44) intended to drive said plunger (12) to and fro,
a device for detecting the compression force applied by said main plunger (12) on the wads of fodder (13) present in said compression duct during the processes of compression of said main plunger (12), said detection device being intended to supply a signal representative of said force, and
hydraulic means (20, 24, 36) intended to adjust automatically the position of said flap (18) as a function of said signal in order to control the density of the bales, said hydraulic means comprising a hydraulic ram (20) associated with said flap (18), a source of fluid under pressure (24) intended to produce a continuous flow of fluid under pressure and means (28, 36, 38, 40) for supplying said ram (20) with fluid when said signal is less than a predetermined threshold and to divert the flow of fluid towards a low pressure reservoir (26) when said signal is greater than said threshold,
characterized in that
the detection device comprises a reaction arm (68) interposed between the machine frame (70) and the transmission assembly (44) in such a way as to be subjected, during the movements of compression of the plunger (12), to reaction forces proportional to the compression forces applied by the plunger (12) on the wads of fodder (13) present in the compression chamber, and
strain gauges (42) associated with said reaction arm (68) and intended to detect the stresses induced in said reaction arm (68) by said reaction forces, and to supply a signal representative of said reaction forces,
and that an electronic control unit (72) is provided, intended to control the hydraulic means (20, 24, 36) in relation to the representative signal supplied by said strain gauges (42).

2. Pick-up baler according to Claim 1, characterized in that the transmission assembly (44) comprises a geared unit (46) and that the reaction arm (68) is interposed between the machine frame (70) and said geared unit (46).

3. Pick-up baler according to Claim 2, characterized in that the reaction arm (68) is made in the form of a tie rod arranged in such a way as to oppose the reaction forces to which the geared unit is subjected.

4. Pick-up baler according to one of Claims 1 to 3, characterized in that the hydraulic means (20, 24, 36) comprise:
a pipe (28) permanently connecting the source of fluid under pressure (24) to said hydraulic ram (20),
a branch pipe (32) from said pipe (28) towards the low pressure fluid reservoir (26),
a regulator (36) in said branch pipe (32), said regulator (36) comprising a manoeuvring head (38) and said strain gauges (42) being operatively linked, through the intermediary of said electronic control unit (72), with the manoeuvring head (38) of the regulator (36) in order to maintain the latter closed when the strain gauges (42) deliver said signal which is less than said threshold and to open the regulator (36) when the strain gauges (42) deliver said signal which is greater than said threshold.

5. Baler press according to Claim 4, characterized in that:
the regulator (36) is mounted fixed in relation to the pick-up baler,
the manoeuvring head (38) of the regulator (36) comprises an electromagnet (39), and
the electronic control unit (72) controls said electromagnet (39) on the basis of the signals supplied by said strain gauges (42).

## Patentansprüche

1. Rechteckballenpresse für Viehfutter, mit
einem Maschinenrahmen (70),
einem Preßkanal (10), in den aufeinanderfolgende Viehfutter-Portionen (13) eingeführt werden, wobei der Preßkanal (10) durch Wände umgrenzt ist, die zumindestens eine gelenkig befestigte Klappe (18) aufweisen,
einem Hauptkolben (12), der hin- und herbeweglich in dem Preßkanal angetrieben wird, um diese Viehfutter-Portionen (13) vorwärtszubewegen, während die Klappe (18) betätigt werden kann, um einen einstellbaren Widerstand gegen eine Vorwärtsbewegung dieser Viehfutter-Portionen (13) auszuüben, so daß der Kolben (12) diese Viehfutter-Portionen komprimiert, um Ballen zu bilden, und die Klappe (18) die Dichte der Ballen steuert,
einer Kraftübertragungseinheit (44), die zum Antrieb des Kolbens (12) für eine Hin- und Herbewegung bestimmt ist,
einer Detektorvorrichtung für die Kompressionskraft, die von dem Hauptkolben (12) auf die Viehfutter-Portionen (13) in dem Preßkanal während der Kompressionshübe des Hauptkolbens (12) ausgeübt wird, wobei die Detektorvorrichtung so ausgebildet ist, daß sie ein diese Kraft darstellendes Signal liefert, und
Hydraulikeinrichtungen (20, 24, 36), die zur automatischen Regelung der Position der Klappe (18) in Abhängigkeit von dem genannten Signal bestimmt sind, um die Dichte des Ballens zu steuern, wobei die Hydraulikeinrichtungen einen mit der Klappe (18) verbundenen Hydraulikzylinder, eine Quelle für unter Druck stehende Hydraulikflüssigkeit (24), die zur Erzeugung einer kontinuierlichen Durchflußmenge der Hydraulikflüssigkeit unter Druck bestimmt ist, und Einrichtungen (28, 36, 38, 40) zur Speisung des Zylinders (20) mit Hydraulikflüssigkeit, wenn das genannte Signal kleiner als ein vorgegebener Schwellwert ist, und zur Ableitung der Strömungsmittelmenge zu einem einen niedrigen Druck aufweisenden Voratsbehälter (26) umfasen, wenn das Signal unterhalb des Schwellenwertes liegt,
dadurch gekennzeichnet, daß
die Detektorvorrichtung einen Reaktionsarm (68) aufweist, der zwischen dem Maschinenrahmen (70) und der Kraftübertragungsanordnung (44) derart angeordnet ist, daß er während der Kompressionshübe des Kolbens (12) Reaktionskräften ausgesetzt wird, die proportional zu den Kompressionskräften sind, die von dem Kolben (12) auf die Viehfutterportionen (13) in dem Preßkanal ausgeübt werden, und
Lastmeßfühler (42) mit dem Reaktionsarm (68) verbunden und dazu bestimmt sind, die in dem Reaktionsarm (68) durch die Reaktionskräfte hervorgerufenen Spannungen zu messen und ein Signal zu liefern, daß diese Reaktionskräfte darstellt, und
eine elektronische Steuereinheit (72) vorgesehen ist, die zur Steuerung der Hydraulikeinrichtungen (20, 24, 36) in Abhängigkeit von dem die Reaktionskräfte darstellenden Signal dient, das von den Lastmeßfühlern (42) gemessen wird.

2. Ballenpresse nach Anspruch 1,
dadurch gekennzeichnet, daß die Kraftübertragungseinheit (44) eine Getriebemotoreinheit (46) aufweist, und daß der Reaktionsarm (68) zwischen dem Maschinenrahmen (70) und der Getriebemotoreinheit (46) angeordnet ist.

3. Ballenpresse nach Anspruch 2,
dadurch gekennzeichnet, daß der Reaktionsarm (68) in Form eines Zugstabes ausgebildet ist, der derart angeorndet ist, daß er den Reaktionskräften entgegenwirkt, denen die Getriebemotoranordnung ausgesetzt ist.

4. Ballenpresse nach einem der Ansprüche 1 bis 3,
dadurch gekennzeichnet, daß die Hydraulikeinrichtungen (20, 24, 36) folgende Teile umfassen:
eine Leitung (28), die dauernd die unter Druck stehende Hydraulikflüssigkeitsquelle (24) mit dem Hydraulikzylinder (20) verbindet,
eine Abzweigleitung (32) von der Leitung (28) zu dem einen niedrigen Druck aufweisenden Hydraulikflüssigkeits-Vorratsbehälter (26),
einen Regler (36) in der Zweigleitung (32), wobei der Regler (36) einen Betätigungskopf (38) aufweist und die Lastmeßfühler (42) betriebsmäßig über die elektronische Steuereinheit (72) mit dem Betätigungskopf (38) des Reglers verbunden sind, um diesen geschlossen zu halten, wenn die Lastmeßfühler (42) dieses Signal liefern, das unterhalb des Schwellenwertes liegt, während sie den Regler (36) öffnen, wenn die Lastmeßfühler (42) das Signal liefern, das größer als dieser Schwellenwert ist.

5. Ballenpresse nach Anspruch 4,
dadurch gekennzeichnet, daß
der Regler (36) fest bezüglich der Ballenpresse befestigt ist, daß der Betätigungskopf (38) des Reglers (36) einen Elektromagneten (39) aufweist, und
daß die elektronische Steuereinheit (72) den Elektromagneten (39) in Abhängigkeit von von den Lastmeßfühlern (42) gelieferten Signalen steuert.
